(19)

Europäisches
Patentamt
European
Patent Office
Office européen
des brevets

(11) **EP 2 458 515 A1**

(12) **EUROPEAN PATENT APPLICATION**

(43) Date of publication:
**30.05.2012 Bulletin 2012/22**

(51) Int Cl.:
**G06F 17/30** (2006.01)

(21) Application number: **11190172.4**

(22) Date of filing: **22.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.11.2010 KR 20100118497**

(71) Applicant: **Samsung Electronics Co., Ltd Gyeonggi-do (KR)**

(72) Inventors:
• **Moon, Chang-Sung**
  **Gyeonggi-do (KR)**
• **Jeong, Jin-Guk**
  **Gyeonggi-do (KR)**
• **Lee, Min-Ho**
  **Gyeonggi-do (KR)**

(74) Representative: **Jenkins, Richard Gavin**
  **Harrison Goddard Foote**
  **Saviour House**
  **9 St Saviourgate**
  **York, YO1 8NQ (GB)**

(54) **Method and apparatus for searching contents in a communication system**

(57)    A method and an apparatus for searching for contents in a communication system are provided. A method of a search system for searching for contents includes obtaining a plurality of keywords from a terminal; determining a meaning of each keyword based on relations between the plurality of the keywords; searching for contents corresponding to the meaning of each keyword among contents provided from an open knowledge system; and providing a contents search result to the terminal.

START

RECEIVE KEYWORDS FROM TERMINAL — 601

CHECK MEANING CORRESPONDING TO EACH KEYWORD — 603

DETERMINE MEANING BY DISAMBIGUATING KEYWORDS — 605

SEARCH FOR CONTENTS CORRESPONDING TO THE DETERMINED MEANING — 607

TRANSMIT CONTENTS SEARCH RESULT TO TERMINAL — 609

END

FIG.6

EP 2 458 515 A1

**Description**

**TECHNICAL FIELD OF THE INVENTION**

The present invention relates generally to a communication system. More particularly, the present invention relates to a method and an apparatus for searching for contents of an open system which provides contents in a communication terminal.

**BACKGROUND OF THE INVENTION**

As the computing environment and the communication technology advance, researches are conducted to record personal information of a user to a terminal and to provide various services using the information. In particular, recent researches study a method for detecting every data generating in a daily life of the user in the terminal, recording the data to the terminal, and providing an adequate service to the user using the recorded data. For example, a service under development searches for adequate contents for the user among contents provided from a particular server based on metadata of the contents stored to the terminal, and provides the searched contents to the user.

However, such a contents search service based on the metadata of the contents cannot accurately reflect characteristics and taste of the individual user, and needs to establish a separate system for storing and managing contents to be provided to the user.

**SUMMARY OF THE INVENTION**

To address the above-discussed deficiencies of the prior art, it is a primary aspect of the present invention to provide a method and an apparatus for searching for contents of an open system which provides contents in a communication terminal.

Another aspect of the present invention is to provide a method and an apparatus for searching for contents of a website using device information, user information, and contents information in a communication terminal.

Yet another aspect of the present invention is to provide a method and an apparatus for definitely determining a meaning of an ambiguous keyword and searching for contents corresponding to the determined meaning in a communication system.

Still another aspect of the present invention is to provide a method and an apparatus for determining a meaning of each keyword using relations between a plurality of keywords in a communication system.

According to one aspect of the present invention, a method of a search system for searching for contents includes obtaining a plurality of keywords from a terminal; determining a meaning of each keyword based on relations between the plurality of the keywords; searching for contents corresponding to the meaning of each keyword among contents provided from an open knowledge system; and providing a contents search result to the terminal.

According to another aspect of the present invention, a method of a terminal for searching for contents includes extracting a plurality of keywords from contents information, device information, and user information stored in the terminal; transmitting the extracted keywords to a search system; receiving a contents search result corresponding to the extracted keywords from the search system; and receiving contents of the search result by accessing an open knowledge system.

According to yet another aspect of the present invention, an apparatus of a search system that searches for contents includes a controller that obtains a plurality of keywords from a terminal, determines a meaning of each keyword based on relations between the plurality of the keywords, and searches for contents corresponding to the meaning of each keyword among contents provided from an open knowledge system; and a communication module that provides a contents search result to the terminal.

According to still another aspect of the present invention, an apparatus of a terminal that searches for contents includes a controller that extracts a plurality of keywords from contents information, device information, and user information stored in the terminal. Under control of the controller, the extracted keywords are transmitted to a search system, a contents search result corresponding to the extracted keywords is received from the search system, and contents of the contents search result are received by accessing an open knowledge system.

Other aspects, advantages, and salient features of the invention will become apparent to those skilled in the art from the following detailed description, which, taken in conjunction with the annexed drawings, discloses exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG 1 illustrates a communication system according to an exemplary embodiment of the present invention;

FIG 2 illustrates relations between keywords according to an exemplary embodiment of the present invention;

FIG 3 illustrates meaning disambiguation of keywords extracted from contents in a search system according to an exemplary embodiment of the present invention;

FIG 4 illustrates signal flows for searching for contents in the communication system according to an exemplary embodiment of the present invention;

FIG 5 illustrates a method for searching for the contents in a communication terminal according to an exemplary embodiment of the present invention;

FIG 6 illustrates a method for searching for contents corresponding to the keyword received from the communication terminal in the search system according to an exemplary embodiment of the present invention;

FIG 7 illustrates the communication terminal according to an exemplary embodiment of the present invention; and

FIG 8 illustrates the search system according to an exemplary embodiment of the present invention.

Throughout the drawings, like reference numerals will be understood to refer to like parts, components and structures.

## DETAILED DESCRIPTION OF THE INVENTION

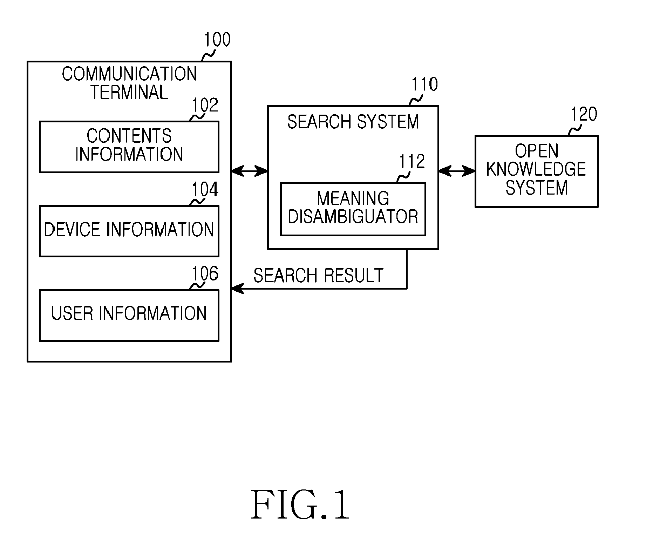

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged communication system. The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide a method and an apparatus for searching for contents of an open knowledge system by extracting keywords from device information, user information, and contents information in a communication terminal. Herein, the open knowledge system indicates a contents provider system freely accessible by the communication terminal. For example, the open knowledge system represents systems such as Wikipedia, YouTube, and Twitter.

Hereinafter, to ease the understanding, an example where a user of the communication terminal determines one contents stored to the terminal and searches for contents related to the determined contents is illustrated. Yet, the present invention is equally applicable to examples where the user determines a plurality of contents and searches for the related contents or a case where the user searches for contents adequate for user characteristics without separate contents selection. Notably, when the user does not determine contents, the present invention can be realized using at least one of contents stored to the communication terminal. The communication terminal encompasses any terminal capable of accessing a website, such as mobile communication terminals, portable terminals, PCs, and TVs.

FIG 1 depicts a communication system according to an exemplary embodiment of the present invention.

Referring to FIG 1, the communication system includes a communication terminal 100, a search system 110, and an open knowledge system 120.

The communication terminal 100 extracts at least one keyword from contents information 102 in the terminal, device information 104 indicating information of the terminal, and user information 106 indicating user characteristics, and transmits the extracted keywords to the search system 110. Herein, the contents information 102 indicates information of contents determined by a user among contents stored to the communication terminal 100, and can include metadata of the contents and content information of the contents. For example, when the contents are a music file, the contents information can include metadata such as genre, title, album, singer, and writer indicating properties of the music file. When the contents are an E-book, the contents information can include text data constituting the E-book. When the contents are an image, the contents information can include EXIF tag of the image and character data in the image. Herein, the character data in the image indicates characters recognizable through an image recognition algorithm. The device information 104 can include a device type, a model name, version information, a resolution, and programs supported of the communication terminal 100, and the user information 106 can include gender, age, language, and life log of the user. The gender, the age, and the language of the user can be obtained by analyzing voice of the user input through a microphone of the communication terminal 100, or input directly from the user. The life log indicates record information (e.g., location information, schedule information, contact information, text transmission and reception information, and contents play information) generated in the communication information.

Upon receiving at least one keyword from the communication terminal 100, the search system 110 functions to search for contents corresponding to the at least one keyword in the open knowledge system 120. In particular, for an ambiguous keyword, the search system 110 definitely determines the meaning of the ambiguous keyword using other keywords received together with the keyword, and searches for contents corresponding to the determined meaning in the open knowledge system 120. For example, when receiving keywords "star", "movie", and "music", since "star" has several meanings including a fixed start, a destiny, and a star actor, the search system 110 can determine that "star" means a star actor by checking relations between "movie" and "music" received together with "star" and the several meanings, and search for contents corresponding to the star actor. For example, as to a keyword "platform" meaning "platform (game), platform computing, railway platform, etc.", the search system 110 can examine relations with other keywords "implementation, open-source, web server, and HTTP" extracted from a sentence or a paragraph of the extracted keyword "platform" and determine "platform computing" of the highest relation as the meaning of "platform".

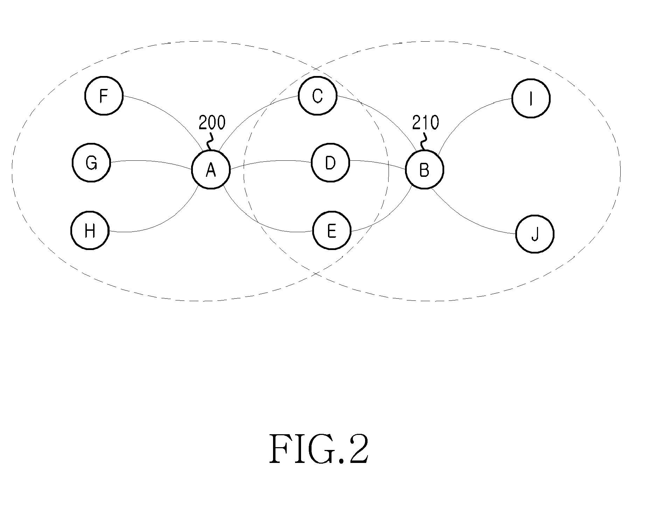

Herein, the search system 110 can pre-store keyword database indicating the relations between the keywords and thus clearly determine the meaning of the keyword. For example, the search system 110 can pre-store the database indicating the relations between keywords A through J as shown in FIG 2, and clearly determine the meaning of a particular keyword by calculating a relation value of other keywords for a particular ambiguous keyword using the database.

Herein, the relation value between the keywords can be calculated based on Equation 1.

$$\mathrm{sim}(A,B) = \frac{\sum\limits_{N \in n(A) \cap n(B)} \left[ w(A,N) + w(B,N) \right]}{\sum\limits_{N \in n(A)} w(A,N) + \sum\limits_{N \in n(B)} w(B,N)} \qquad \text{[Eqn. 1]}$$

In Equation 1, A 200 and B 210 indicate the keyword, sim(A,B) denotes the relation value between the keyword A 200 and the keyword B 210, N denotes a keyword commonly linked to the keyword A 200 and the keyword B 210, and w( ) denotes a weight for the link of the two keywords. That is, in Equation 1, the denominator of the right equation implies a weight sum of all of keywords linked to the keyword A 200 is added up with a weight sum of all of keywords linked to the keyword B 210, and the numerator indicates a weight sum of the keyword N commonly linked to the keyword A 200 and the keyword B 210.

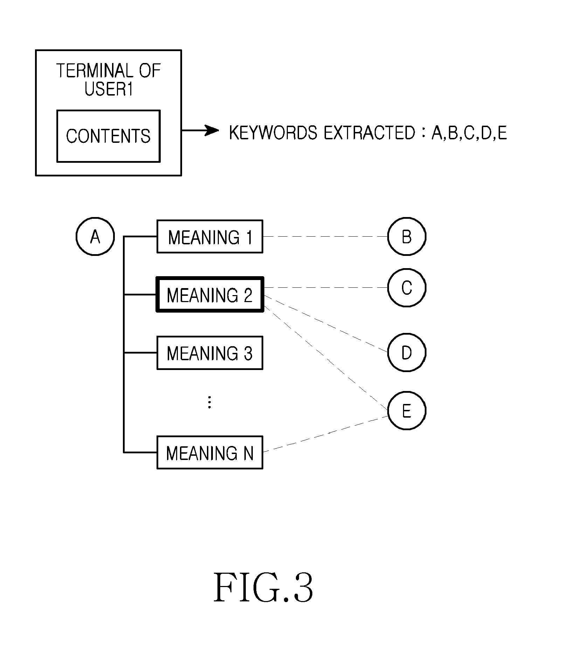

For example, when receiving keywords A through E including contents from a terminal of a first user as shown in FIG 3 and the keyword A has N-ary meanings, the search system 110 can examine the relations between the N-ary meanings of the keyword A and the keywords B through E respectively, and determine the second meaning of the highest relation as the meaning of the keyword A.

Upon precisely determining the meaning of each keyword received, the search system 110 searches the open knowledge system 120 for contents corresponding to the meaning of one keyword or the multiple keywords. In so doing, the search system 110 requests the open knowledge system 120 to provide the contents corresponding to the determined meaning. After receiving at least one contents or Uniform/Universal Resource Locator (URL) of the contents, the search system 110 can forward the received contents or URL to the communication terminal 100. When having information of the contents of the open knowledge system 120 in advance, the search system 110 can retrieve at least one contents or the URL of the contents corresponding to the meaning in the search system 110 and provide the contents or the URL to the communication terminal 100 without the request to the open knowledge system 120.

In addition, the search system 110 can determine a certain number of the meanings having the relation value with other keywords greater than a threshold, among the multiple meanings of a particular keyword, search for contents corresponding to the certain number of the meanings, and determine priority of the searched contents using the relation value of the meanings.

Next, the communication terminal 100 can display the contents or the contents URL provided via the search system 110 in the screen to inform to the user, and consume the contents by accessing the open knowledge system 120 under control of the user.

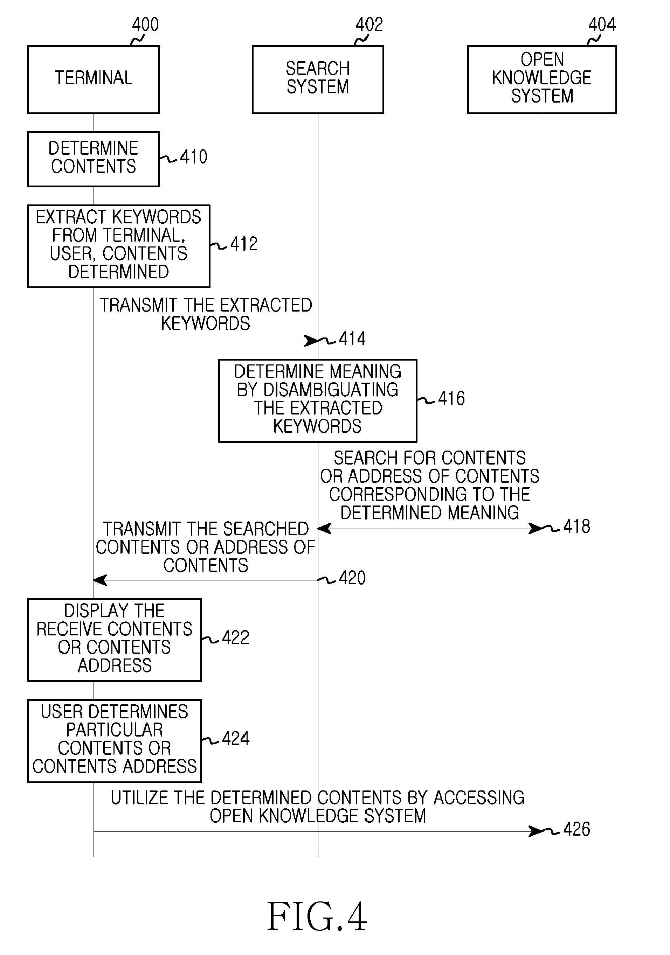

FIG 4 illustrates signal flows for searching for the contents in the communication system according to an exemplary embodiment of the present invention.

Referring to FIG 4, a terminal 400 determines contents under the control of the user in step 410. That is, the user can determine one of the contents stored to the terminal 400 and request to search for contents relating to the determined contents.

The terminal 400 extracts keywords from the device information 104 indicating the information of the terminal 400, the user information 106 indicating the user characteristics, and the metadata or the content information of the determined contents in step 412, and then transmits the extracted keywords to a search system 402 in step 414. Herein, the keywords can be extracted by applying various conventional methods.

The search system 402 receiving the keywords determines the meaning of each keyword by disambiguating the meanings of the received keywords in step 416, and searches for contents or the URL of the contents corresponding to the determined meaning by accessing an open knowledge system 404 in step 418. Herein, when the search system 402 has the information of the contents as to the contents provided by the open knowledge system 404 in advance, it can search for the contents or the URL of the contents corresponding to the meaning based on the possessed information without accessing the open knowledge system 404.

Herein, the search system 402 can definitely determine the meaning of the ambiguous keyword using the relation value between the keywords as expressed in Equation 1. The search system 402 can determine a certain number of the meanings having the relation value with the other keywords greater than the threshold, among the multiple meanings of the keyword, prioritize the certain number of the meanings according to the relation value, and prioritize the contents by searching for contents corresponding to the certain number of the meanings.

Next, the search system 402 transmits the searched contents or the contents URL to the terminal 400 in step 420. The terminal 400 displays the contents or the contents URL received from the search system 402 in the screen in step 422. Herein, when the contents or the contents URL has the priority, the terminal 400 can display the contents or the contents URL in the screen based on the priority.

The terminal 400 determines particular contents or a particular contents URL under the control of the user in step 424, and then uses the corresponding contents by accessing the open knowledge system 404 in step 426.

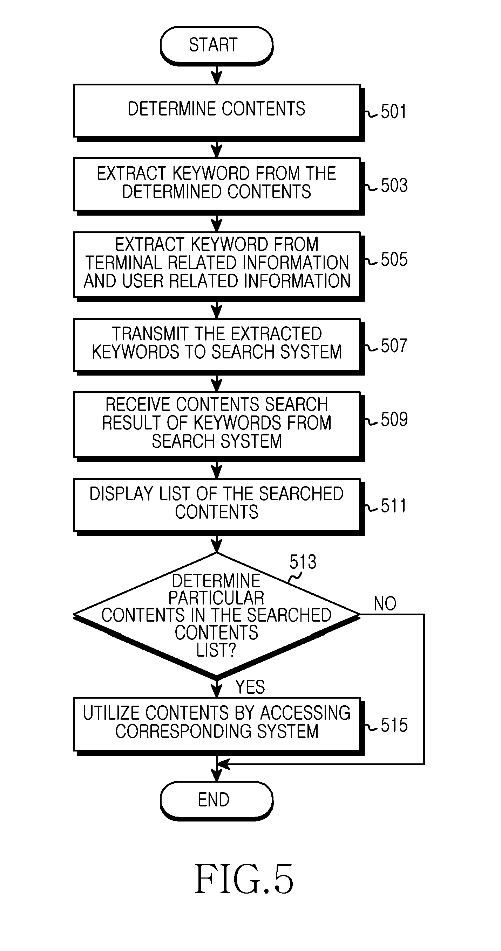

FIG 5 illustrates a method for searching for the contents in the communication terminal according to an exemplary embodiment of the present invention.

Referring to FIG 5, when the contents are determined under the user's control in step 501, the terminal extracts keywords from the determined contents in step 503. For example, when a music file is determined, the terminal can extract metadata of the determined music file; that is, data of genre, title, album, singer, and writer as the keywords. When an eBook file is determined, the terminal can extract meaningful words, as the keywords, from text data of the determined eBook. Since the eBook includes a great number of words, only nouns or pronouns can be extracted as the keywords.

In step 505, the terminal extracts keywords from the device information indicating the terminal related information and the user information indicating the user characteristics. Herein, the device information can include the device type, the model name, the version information, the resolution, and the programs supported. The user information can include the gender, the age, the language, and the life log of the user. The information can be the keyword. The gender, the age, and the language of the user can be obtained by analyzing the voice of the user input through the microphone of the communication terminal 100, or input directly from the user. The terminal can extract the keywords from the pre-stored user information under the user's control, and can newly obtain the user information when contents is determined for the contents search and extract the keyword from the newly obtained user information.

Next, the terminal transmits the extracted keywords to the search system in step 507, and receives a contents search result of the keywords from the search system in step 509. The contents search result can include any one of the contents corresponding to the keyword and the URL of the contents corresponding to the contents.

In step 511, the terminal displays the searched contents list. The contents list can include any one of the contents corresponding to the keyword and the URL of the contents corresponding to the keyword.

In step 513, the terminal determines whether the user determines particular contents in the search contents list. When the user does not determine particular contents within a certain time, the terminal finishes this process.

By contrast, when the user determines particular contents in the search contents list, the terminal uses the determined contents by accessing the corresponding open knowledge system in step 515, and finishes this process. Herein, when the contents are not suitable for a support format of the communication terminal, the communication terminal can converts the contents according to the support format and provide the converted contents to the user. For example, when the contents are in the size or of the file type not supported by the communication terminal, the communication terminal can convert the contents into the size or the file type supported by the communication terminal.

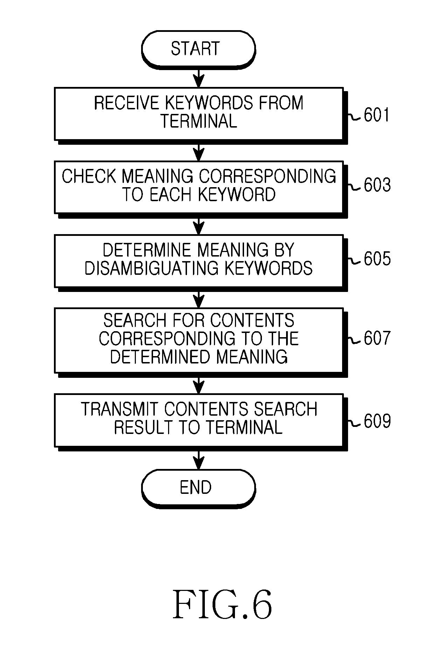

FIG 6 illustrates a method for searching for the contents corresponding to the keyword received from the communication terminal in the search system according to an exemplary embodiment of the present invention.

Referring to FIG 6, the search system receives at least one keyword from the terminal 601 and checks the meaning corresponding to each received keyword in step 603.

In step 605, the search system determines the meaning by disambiguating the ambiguous keyword. Herein, the search system can definitely determine the meaning of the ambiguous keyword using the relation value between the keywords as expressed in Equation 1. In so doing, when the multiple meanings of the keyword include a plurality of the meanings having the relation value of the other keywords greater than the threshold, the search system can determine the priority by determining the certain number of the meanings having the relation value greater than the threshold. The determined priority can be used to prioritize the contents searched in step 607.

In step 607, the search system searches for contents corresponding to the determined meaning from the contents provided from the open knowledge system. Herein, the search system can receive the corresponding contents or the corresponding contents URL by requesting the contents corresponding to the meaning to the open knowledge system. When the search system has the information of the contents provided by the open knowledge system in advance, it can search for the contents or the contents URL corresponding to the meaning based on the possessed information without accessing the open knowledge system 404.

In step 609, the search system transmits the contents search result to the terminal. Herein, when the multiple meanings are determined for one keyword in step 605, the search system can prioritize the multiple meanings for the respective contents corresponding to the multiple meanings and thus transmit them to the terminal.

Next, the search system finishes this process.

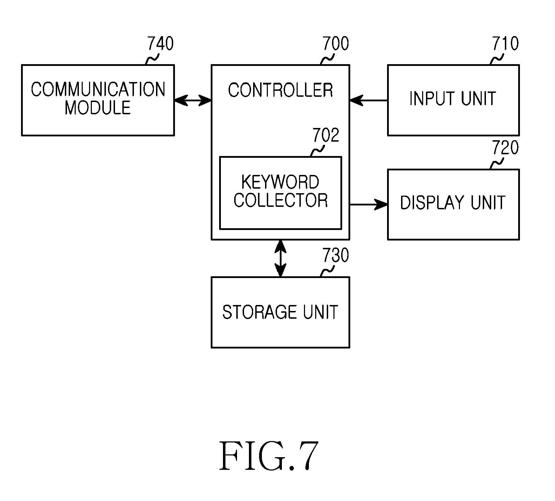

FIG 7 illustrates the communication terminal according to an exemplary embodiment of the present invention.

Referring to FIG 7, the terminal includes a controller 700, an input unit 710, a display unit 720, a storage unit 730, and a communication module 740. The controller 700 includes a keyword collector 702.

The controller 700 controls and processes the operations of the terminal. In exemplary embodiments of the present invention, the controller 700 controls and processes to search for the contents from the open knowledge system. That is, the controller 700 controls and processes to extract at least one keyword from the contents information of the terminal, the device information indicating the terminal information, and the user information indicating the user characteristics, to provide the keyword to the search system, to receive the contents corresponding to the keyword from the search system, to display the received contents in the screen, and to utilize particular contents by accessing the open knowledge system according to the user's selection. In so doing, the controller 700 extracts the keyword from the metadata of the contents or the text data of the contents through the keyword collector 702, acquires the user information by analyzing key data, touch data, and a user voice signal input via the input unit 710, and extracts the keyword from the acquired user information. Also, the controller 700 extracts the keyword from the device information of the terminal through the keyword collector 702.

The input unit 710 receives data from the user and forwards the data to the controller 700. The input unit 710 can include a keypad including at least one of number keys, letter keys, and function keys, a touch sensor for detecting user's touch, and a microphone for receiving the user voice.

The display unit 720 displays various state information, numbers, letters, and images generating during the operation of the terminal. In particular, the display unit 720 displays the contents list including the contents provided from the search system under control of the controller 700.

The storage unit 730 stores various programs and data required for the operation of the terminal, and contains the device information, the user information, and the contents information. The user information and the contents information can be added, deleted, and changed according to the user's control.

The communication module 740 transmits and receives signals to and from the search system and the open knowledge system under the control of the controller 700. More specifically, the communication module 740 transmits the keyword provided from the controller 700 to the search system, receives the contents or the contents URL from the search system, and outputs the contents or the contents URL to the controller 700. Under the control of the controller 700, the communication module 740 receives the corresponding contents by accessing the open knowledge system, and provides the contents to the controller 700.

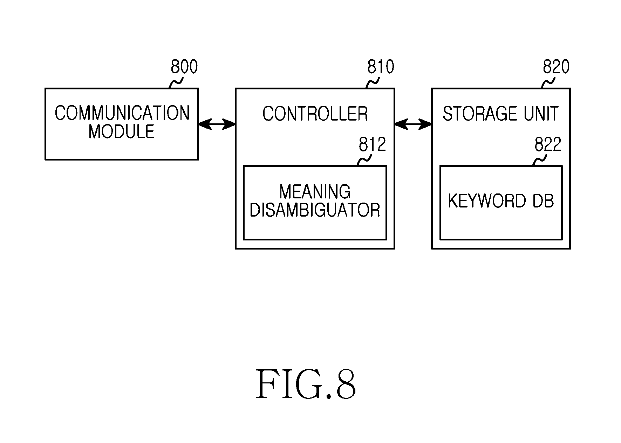

FIG 8 illustrates the search system according to an exemplary embodiment of the present invention.

Referring to FIG 8, the search system includes a communication module 800, a controller 810, and a storage unit 820. The controller 810 includes a meaning disambiguator 812, and the storage unit 820 includes a keyword DB 822.

The communication module 800 transmits and receives signals to and from the terminal and the open knowledge system under control of the controller 810. More specifically, the communication module 800 forwards the keyword received from the terminal to the controller 810, and requests to transmit the corresponding contents by transmitting the meaning of the keyword to the open knowledge system under the control of the controller 810. The communication module 800 receives the contents or the contents URL from the open knowledge system, and transmits the received contents or contents URL to the terminal under the control of the controller 810.

The controller 810 controls and processes the operations of the search system, and controls and processes to search for the contents corresponding to the keyword received from the terminal among the contents provided from the open knowledge system and to provide the contents to the terminal. Particularly, when the keyword received from the terminal is ambiguous, the controller 810 controls and processes to precisely determine the meaning of the keyword through the meaning disambiguator 812 and to search for contents with the determined meaning. Herein, the meaning disambiguator 812 can disambiguate the meaning of each keyword using the relation value between the keywords as expressed in Equation 1.

The storage unit 820 stores various programs and data required for the operation of the search system, and can pre-store the keyword database indicating the relations between the keywords. The storage unit 820 can store the information of the contents provided from the open knowledge system.

While the communication terminal extracts the keyword from the device information, the user information, and the contents information and then transmits the keyword to the search system, the communication terminal can transmit the device information, the user information, and the contents information to the search system and the search system can extract the keyword from the received information. While the search system disambiguates the meaning of the keyword, the meaning of the keyword can be disambiguated in the communication terminal.

In addition, while the search system is separately equipped, the communication terminal can function as the search system.

Now, exemplary embodiments for searching for the contents in the communication terminal are described based on the above.

In one exemplary embodiment, the user determines an MP3 music file, an image file, or a movie file in the communication terminal. When the determined file is the music file, the communication terminal extracts the keyword such as title, genre, and singer, from an ID3 tag. When the determined file is the image file, the communication terminal extracts the keyword such as title, creation location, and creation time, from an EXIF tag. When the determined file is the movie file, the communication terminal extracts the keyword such as title, actor, and genre, from metadata of the movie file, extracts the keyword from the device information and the user information obtained in advance, and transmits the keywords to the search system. At this time, the search system has the database indicating the relations between the title and items with respect to the items of Wikipedia, YouTube, or Twitter which is the open knowledge system. The search system disambiguates the received keywords and retrieves the items related to the disambiguated meaning from the database. In so doing, the search system searches for only the items playable or displayable in the communication terminal using the device information of the communication terminal, generates a list including the searched items, and transmits the list to the communication terminal. The communication terminal receives a particular item determined by the user by displaying the list in the screen, accesses the corresponding open knowledge system through a web browser, and thus displays a page of the determined item.

In another exemplary embodiment, the user determines an eBook file in the communication terminal. The communication terminal extracts the keywords by analyzing the text data of the eBook file, extracts the keyword from the device information and the user information acquired in advance, and transmits the keywords to the search system. The extracted keywords can be represented as hyperlinks. The search system has the database indicating the relations between the title and the items with respect to the items of Wikipedia, YouTube, or Twitter which is the open knowledge system. The search system disambiguates the received keywords, generates the list by retrieving the items related to the disambiguated meaning in the database, and transmits the generated list to the communication terminal. The communication terminal receives a particular item determined by the user by displaying the list in the screen, accesses the corresponding open knowledge system through the web browser, and thus displays a page of the determined item.

In yet another exemplary embodiment, the communication terminal obtains information relating to the age, the gender, and the language of the user by analyzing the voice signal input in the phone call of the user. When the user takes a picture in a particular coffee shop, the communication terminal stores location information of the user as the metadata of the picture. Next, when the user determines the picture taken in the coffee shop, the communication terminal transmits the analyzed age, gender, and language of the user and the location information stored as the metadata of the picture, to the search system. The search system can retrieve the items relating to the coffee shop or the coffee shop surrounding area among the items corresponding to the user language in Wikipedia, YouTube, or Twitter, and provide the retrieved items to the user.

As set forth above, the communication terminal extracts the keywords from the device information, the user information, and the contents information, determines the meaning of the extracted keywords using the relations between the keywords, and searches for the contents of the website based on the determined meaning. Therefore, it is possible to search for the contents of the high relation to the contents determined by the user among the great number of the contents on the web and to provide the searched contents to the user, and there is no need to establish a separate system for storing and managing the contents.

While the invention has been shown and described with reference to certain exemplary embodiments thereof, it will be understood by those skilled in the art that various changes in form and details can be made therein without departing from the spirit and scope of the invention as defined by the appended claims and their equivalents.

**Claims**

1. A method of a search system for searching for contents, comprising:

   obtaining (414) a plurality of keywords from a terminal;
   determining (416, 605) a meaning of each keyword based on relations between the plurality of the keywords;
   searching (418, 609) for contents corresponding to the meaning of each keyword among contents provided from an open knowledge system; and
   providing (420) a contents search result to the terminal.

2. The method of claim 1, wherein the plurality of the keywords is received from the terminal or extracted from at least one of contents information, device information, and user information of the terminal,
   the contents information comprises at least one of metadata of the contents, and text data and character data constituting the contents,
   the device information comprises at least one of a type, a model name, version information, a resolution, and a supported program of the terminal, and
   the user information comprises at least one of a user gender, an age, a language, and a life log.

3. The method of claim 1, wherein the determining of the meaning of each keyword comprises:

   determining a meaning of highest relation of other keywords, among a plurality of meanings for a particular keyword, as the meaning of the particular keyword.

4. The method of claim 1, wherein the searching for the contents comprises:

   requesting (426, 603) contents corresponding to the meaning of each keyword to the open knowledge system; and
   receiving at least one of contents corresponding to the meaning of each keyword and an address of the contents from the open knowledge system (120).

5. The method of claim 1, wherein the searching for the contents comprises:

   searching (607) for contents of information corresponding to the meaning of each keyword from pre-stored information relating to contents of the open knowledge system.

6. A method of a terminal for searching for contents, comprising:

   extracting (412) a plurality of keywords from contents information, device information, and user information stored in the terminal;
transmitting (414) the extracted keywords to a search system;
receiving (420) a contents search result corresponding to the extracted keywords from the search system; and
receiving contents of the search result by accessing an open knowledge system (120).

7. The method of claim 6, wherein the contents information comprises at least one of metadata of the contents, and text data and character data constituting the contents,
the device information comprises at least one of a type, a model name, version information, a resolution, and a supported program of the terminal, and
the user information comprises at least one of a user gender, an age, a language, and a life log.

8. The method of claim 6, further comprising:

determining (416, 605) a meaning of highest relation of other keywords, among a plurality of meanings for a particular keyword, as the meaning of the particular keyword; and
transmitting (420, 609) the keyword of the determined meaning to the search system,

9. An apparatus of a search system for searching for contents, comprising:

a controller (700) for controlling to obtain a plurality of keywords from a terminal, to determine a meaning of each keyword based on relations between the plurality of the keywords, and to search for contents corresponding to the meaning of each keyword among contents provided from an open knowledge system; and
a communication module (740) for providing a contents search result to the terminal.

10. The apparatus of claim 9, wherein the plurality of the keywords is received from the terminal or extracted from at least one of contents information, device information, and user information of the terminal,
the contents information comprises at least one of metadata of the contents, and text data and character data constituting the contents,
the device information comprises at least one of a type, a model name, version information, a resolution, and a supported program of the terminal, and
the user information comprises at least one of a user gender, an age, a language, and a life log.

11. The apparatus of claim 9, wherein the controller determines a meaning of highest relation of other keywords, among a plurality of meanings for a particular keyword, as the meaning of the particular keyword.

12. The apparatus of claim 9, wherein the controller searches for contents corresponding to the meaning of each keyword from pre-stored contents information of the open knowledge system.

13. An apparatus of a terminal for searching for contents, comprising:

a controller (700) for extracting a plurality of keywords from contents information, device information, and user information stored in the terminal,
wherein, under control of the controller, the extracted keywords are transmitted to a search system, a contents search result corresponding to the extracted keywords is received from the search system, and contents of the contents search result are received by accessing an open knowledge system.

14. The apparatus of claim 13, wherein the contents information comprises at least one of metadata of the contents, and text data and character data constituting the contents,
the device information comprises at least one of a type, a model name, version information, a resolution, and a supported program of the terminal, and
the user information comprises at least one of a user gender, an age, a language, and a life log.

15. The apparatus of claim 13, wherein the controller determines a meaning of highest relation of other keywords, among a plurality of meanings for a particular keyword, as the meaning of the particular keyword, and transmits the keyword of the determined meaning to the search system.

100

COMMUNICATION
TERMINAL
102

CONTENTS
INFORMATION

104

DEVICE INFORMATION

106

USER INFORMATION

110

SEARCH SYSTEM

112

MEANING
DISAMBIGUATOR

SEARCH RESULT

120

OPEN
KNOWLEDGE
SYSTEM

FIG.1

FIG.2

TERMINAL OF
USER1

CONTENTS → KEYWORDS EXTRACTED : A,B,C,D,E

A

MEANING 1 ----- B

MEANING 2 ----- C

MEANING 3 ----- D

⋮

MEANING N ----- E

FIG.3

400

TERMINAL

402

SEARCH
SYSTEM

404

OPEN
KNOWLEDGE
SYSTEM

DETERMINE
CONTENTS ~410

EXTRACT KEYWORDS
FROM TERMINAL,
USER, CONTENTS
DETERMINED ~412

TRANSMIT THE EXTRACTED
KEYWORDS

~414

DETERMINE MEANING
BY DISAMBIGUATING
THE EXTRACTED
KEYWORDS ~416

SEARCH FOR CONTENTS
OR ADDRESS OF CONTENTS
CORRESPONDING TO THE
DETERMINED MEANING

TRANSMIT THE SEARCHED
CONTENTS OR ADDRESS OF
CONTENTS

~418

~420

DISPLAY THE
RECEIVE CONTENTS
OR CONTENTS
ADDRESS ~422

USER DETERMINES
PARTICULAR
CONTENTS OR
CONTENTS ADDRESS ~424

UTILIZE THE DETERMINED CONTENTS BY ACCESSING
OPEN KNOWLEDGE SYSTEM

~426

FIG.4

START

DETERMINE CONTENTS ~ 501

EXTRACT KEYWORD FROM THE DETERMINED CONTENTS ~ 503

EXTRACT KEYWORD FROM TERMINAL RELATED INFORMATION AND USER RELATED INFORMATION ~ 505

TRANSMIT THE EXTRACTED KEYWORDS TO SEARCH SYSTEM ~ 507

RECEIVE CONTENTS SEARCH RESULT OF KEYWORDS FROM SEARCH SYSTEM ~ 509

DISPLAY LIST OF THE SEARCHED CONTENTS ~ 511

DETERMINE PARTICULAR CONTENTS IN THE SEARCHED CONTENTS LIST? 513

NO

YES

UTILIZE CONTENTS BY ACCESSING CORRESPONDING SYSTEM ~ 515

END

FIG.5

START

RECEIVE KEYWORDS FROM
TERMINAL　　⌐601

CHECK MEANING CORRESPONDING
TO EACH KEYWORD　　⌐603

DETERMINE MEANING BY
DISAMBIGUATING KEYWORDS　　⌐605

SEARCH FOR CONTENTS
CORRESPONDING TO THE
DETERMINED MEANING　　⌐607

TRANSMIT CONTENTS SEARCH
RESULT TO TERMINAL　　⌐609

END

# FIG.6

FIG.7

800

COMMUNICATION
MODULE

810

CONTROLLER

812

MEANING
DISAMBIGUATOR

820

STORAGE UNIT

822

KEYWORD DB

FIG.8

EP 2 458 515 A1

Europäisches
Patentamt
European
Patent Office
Office européen
des brevets

**EUROPEAN SEARCH REPORT**

Application Number

EP 11 19 0172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THANH TRAN ET AL: "Ontology-Based Interpretation of Keywords for Semantic Search", 11 November 2007 (2007-11-11), THE SEMANTIC WEB; [LECTURE NOTES IN COMPUTER SCIENCE], SPRINGER BERLIN HEIDELBERG, BERLIN, HEIDELBERG, PAGE(S) 523 - 536, XP019136899, ISBN: 978-3-540-76297-3 * the whole document * ----- | 1-15 | INV. G06F17/30 |
| X | YUANGUI LEI ET AL: "SemSearch: A Search Engine for the Semantic Web", 1 January 2006 (2006-01-01), MANAGING KNOWLEDGE IN A WORLD OF NETWORKS LECTURE NOTES IN COMPUTER SCIENCE;LECTURE NOTES IN ARTIFICIAL INTELLIG ENCE;LNCS, SPRINGER, BERLIN, DE, PAGE(S) 238 - 245, XP019045775, ISBN: 978-3-540-46363-4 * the whole document * ----- | 1-15 | |
| X | US 6 453 315 B1 (WEISSMAN ADAM J [US] ET AL) 17 September 2002 (2002-09-17) * column 1, line 23 - column 12, line 62 * ----- | 1-15 | **TECHNICAL FIELDS SEARCHED (IPC)** G06F |

The present search report has been drawn up for all claims

| Place of search | Date of completion of the search | Examiner |
|---|---|---|
| The Hague | 3 February 2012 | Hackelbusch, Richard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 19 0172

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2012

| Patent document cited in search report | | Publication date | Patent family member(s) | Publication date |
|---|---|---|---|---|
| US 6453315 | B1 | 17-09-2002 | US 6453315 B1<br>US 2011191175 A1 | 17-09-2002<br>04-08-2011 |

EPO FORM P0459

For more details about this annex : see Official Journal of the European Patent Office, No. 12/82